(19) Europäisches Patentamt / European Patent Office / Office européen des brevets

(11) **EP 3 337 154 A1**

(12) **EUROPEAN PATENT APPLICATION**

(43) Date of publication:
**20.06.2018 Bulletin 2018/25**

(51) Int Cl.:
*H04N 5/225* (2006.01)  *H04N 5/232* (2006.01)
*H04N 13/00* (2018.01)  *H04N 13/04* (2006.01)
*G02B 27/01* (2006.01)

(21) Application number: **16306678.0**

(22) Date of filing: **14.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **DANIEAU, FABIEN
35576 Cesson Sévigné Cedex (FR)**
• **GUILLO, ANTOINE
35576 Cesson Sévigné Cedex (FR)**
• **DORE, RENAUD
35576 Cesson Sévigné Cedex (FR)**

(74) Representative: **Merlet, Hugues
TECHNICOLOR
1-5, rue Jeanne d'Arc
92130 Issy-les-Moulineaux (FR)**

(54) **METHOD AND DEVICE FOR DETERMINING POINTS OF INTEREST IN AN IMMERSIVE CONTENT**

(57)    A method and device for determining a first information representative of a point of interest of a large field-of-view content. To reach that aim, a second information representative of at least a viewing direction associated with at least a part of the large field-of-view content is obtained; a third information representative of an interest in the large field-of-view content is obtained; and the first information is determined from the second information and the third information.

**Fig 1A**

**Description**

**1. Technical field**

The present disclosure relates to the domain of immersive image/video content (also called large field-of-view content). The present disclosure is also understood in the context of the determining of point(s) or area(s) of interest comprised in the immersive image or video and/or the processing of the immersive image or video for example according to the point(s) or area(s) of interest.

**2. Background art**

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Thanks to the recent large field of view display devices such as Head Mounted Displays (HMD), CAVE system or the like and virtual reality systems, new audiovisual experiences are provided. In such configurations, a user can move his head and body to explore a 360° s cene (up to a 4pi steradian field of view), leading to a strong feeling of immersion. In this context, new audiovisual contents are created to take advantage of this technology. Large field-of-view contents such as 360° movies are produced thanks to dedicated 3D engines (computer-generated imagery (CGI)) or actual cameras with a large field of view.

A key issue with such content is that the user watching the large field-of-view content controls the camera and thus may miss interesting events / point of interest. To tackle this issue a simple solution is to "rotate" the large field-of-view content to make sure that the point of interest always faces the user. However this technique often leads to motion sickness effects and so decreases the user experience.

A complementary issue is that the point of interest in the large field-of-view content needs to be known in order to attract the user's attention toward it. Professional movie directors may resolve somehow this issue by making sure that point of interests remain in front of the user during the shooting stage. But this issue is particularly present in amateur videos where a 360°camera have been used to capture an event wi thout a specific staging. Such large field-of-view contents are now abundant on current streaming platforms and users consuming such large field-of-view contents may need assistance to not miss point(s) of interest.

**3. Summary**

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of determining a first information representative of a point of interest of a large field-of-view content, the method comprising:

- obtaining a second information representative of at least a viewing direction associated with at least a part of the large field-of-view content;
- obtaining a third information representative of an interest in the large field-of-view content;
- determining the first information from the second information and the third information.

The present disclosure also relates to a device configured to determine a first information representative of a point of interest of a large field-of-view content, the device comprising a memory associated with a processor configured to:

- obtain a second information representative of at least a viewing direction associated with at least a part of the large field-of-view content;
- obtain a third information representative of an interest in the large field-of-view content;
- determine the first information from the second information and the third information.

The present disclosure also relates to a device configured to determine a first information representative of a point of interest of a large field-of-view content, the device comprising:

- means for obtaining a second information representative of at least a viewing direction associated with at least a part of the large field-of-view content;
- means for obtaining a third information representative of an interest in the large field-of-view content;
- means for determining the first information from the second information and the third information.

According to a particular characteristic, the third information belongs to a group of information comprising:

- information representative of the time spent to consume the large field-of-view content;
- information representative of a rate associated with the large field-of-view content;
- information representative of a result of a semantic analysis of a comment associated with the large field-of-view content;
- information representative of the number of times the large field-of-view content has been rendered; and
- information representative of a distribution of the large field-of-view content on a network.

According to a specific characteristic, a first weighting value is determined from the third information, the second information being weighted with the first weighting value to determine the first information.

According to a particular characteristic, a fourth information representative of a profile of a user consuming said large field-of-view content is obtained, the first information being further determined from the fourth information

According to another characteristic, a second weighting value is determined from the fourth information, the second information being weighted with the second weighting value to determine the first information.

According to a particular characteristic, the large field-of-view content is processed according to the first information and the processed large field-of-view content is transmitted.

The present disclosure also relates to a computer program product comprising program code instructions to execute the steps of the abovementioned method, when this program is executed on a computer.

The present disclosure also relates to a (non-transitory) processor readable medium having stored therein instructions for causing a processor to perform at least the abovementioned method.

## 4. List of figures

The present principles will be better understood, and other specific features and advantages will emerge upon reading the following description, the description making reference to the annexed drawings wherein:

- figures 1 A and 1 B show a large field-of-view content, in accordance with an example of the present principles;
- figure 2 shows an equirectangular mapping function associated with the large field-of-view content of figures 1A and/or 1B, in accordance with examples of the present principles;
- figure 3 shows a layout of the cube mapping function associated with the large field-of-view content of figures 1A and/or 1B, in accordance with examples of the present principles;
- figure 4 shows a process of determining point(s) of interest of the large field-of-view content of figures 1A and/or 1B, in accordance with an example of the present principles;
- figure 5 shows a representation of an information representative of point(s) of interest determined with the process of figure 4, in accordance with an example of the present principles;
- figure 6 shows a system configured to incite a user to watch the determined point(s) of interest of the large field-of-view content of figures 1 A and/or 1 B, in accordance with an examples of the present principles;
- figure 7 shows the structure of an apparatus adapted to display the large field-of-view content of figures 1A and/or 1B, in accordance with an example of the present principles;
- figure 8 shows the structure of an apparatus adapted to implement the process of figure 4 and/or the method of figure 9, in accordance with an example of the present principles;
- figure 9 shows a method of determining information representative of a point of interest of the large field-of-view content of figures 1 A and/or 1 B, in accordance with a particular embodiment of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of determining a first information representative of one or more points of interest comprised in a large field-of-view content or part of the large field-of-view content. The method comprises obtaining a second information representative of one or more viewing directions associated with the large field-of-view content, i.e. part(s) of the large field-of-view content that are viewed when displaying the large field-of-view content. The method further comprises the obtaining of a third information representative of an interest in the large field-of-view content, i.e. a third information that is representative of the interest that is taken in the large field-of-view content by one or more users having watched or watching the large field-of-view content. A first information representative of the point(s) of interest of the large field-of-view content is determined from the obtained second information and the obtained third information.

A large field-of-view content may be, among others, an immersive video representing a real scene for example, a three-dimension computer graphic imagery scene (3D CGI scene), a point cloud, lightfield. Many terms might be used to design such immersive videos: Virtual Reality (VR), 360, panoramic, $4\pi$ steradians, immersive, omnidirectional or large field of view for example. The large field-of-view content may be a 2D (2-dimensional) or a 3D (3-dimensional) content.

Determining the point of interest of the large field-of-view enables to help a user watching the large field-of-view content to not miss the point(s) of interest and/or possibly incite, e.g. by processing the large field-of-view content, a user watching the large field-of-view content to watch the large field-of-view content in the direction(s) associated with the determined point(s) of interest.

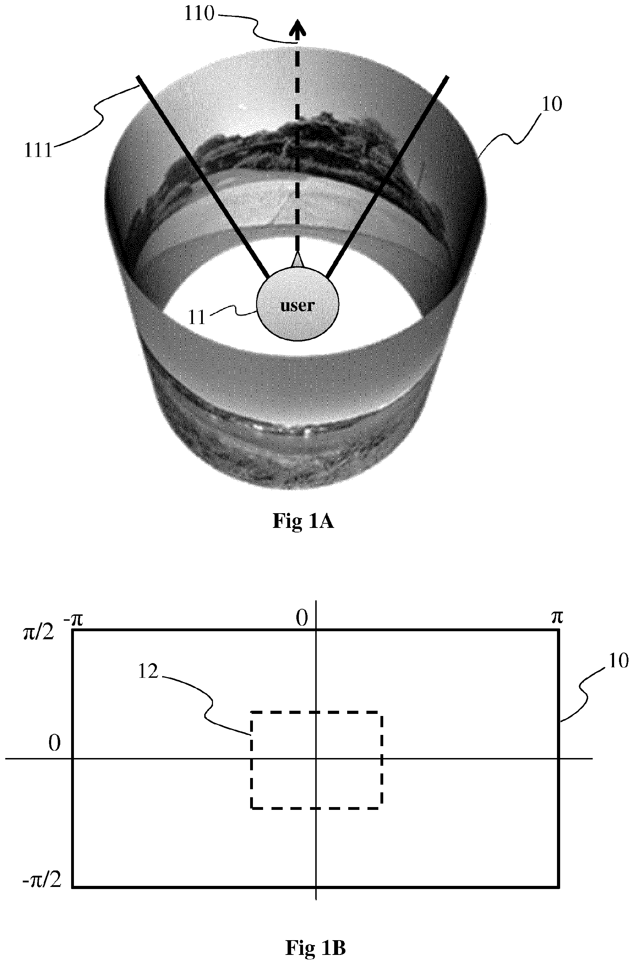

**Figures 1A** shows a user 11 immersed in a large field-of-view video content 10, e.g. a $4\pi$ steradian video content (or spherical video content), also called immersive content, according to a particular and non-limitative embodiment of the present principles.

**Figure 1 A** illustrates a 3D representation example of the large field-of-view content. The large field-of-view content 10 corresponds for example to a real scene acquired with one or more cameras or to a virtual scene synthesized by using a 3D engine. According to a variant, the large field-of-view content 10 corresponds to a representation of a real scene including virtual object(s), i.e. a blending of real and virtual scenes. The large field-of-view content 10 corresponds for example to a real scene acquired with one or more cameras or to the combining / compositing of different elements of a real scene each acquired with one or more cameras. As illustrated in figure 1 A, the user 11 is watching at a part of the large field-of-view content according to a viewing direction 110, the viewing direction 110 corresponding to the main direction of the gaze of the user 11. A field of view 111 is associated with the viewing direction 110, the field of view 111 corresponding to a part only of the large field-of-view content 10. When the gaze direction of the user 11 changes, the part of the large field-of-view content seen by the user (and corresponding to the field of view) changes consequently. The user 11 may wander his/her gaze within the large field-of-view content by for example moving his/her head (or his/her body or a part of it) from left to right (or inversely) and/or from top to bottom (or inversely).

**Figure 1 B** shows an example of the large field-of-view content 10, in the non-limiting exemplary form of a $4\pi$ steradian video content, according to a particular and non-limitative embodiment of the present principles. Figure 1 B corresponds to a planar representation of the large field-of-view content 10. A part 12 of the large field-of-view content 10 corresponds for example to the part of the large field-of-view content displayed onto an immersive display device adapted to visualize immersive contents, the size of the part 12 being for example equal to the field of view provided by the immersive display device. The part displayed on the immersive display device may be called an image in the following description.

The immersive display device used to visualize the large field-of-view content 10 is for example a HMD (Head-Mounted Display), worn on the head of a user or as part of a helmet. The HMD advantageously comprises one or more display screens (for example LCD (Liquid Crystal Display), OLED (Organic Light-Emitting Diode) or LCOS (Liquid Crystal On Silicon)) and sensor(s) configured for measuring the change(s) of position of the HMD, for example gyroscopes or an IMU (Inertial Measurement Unit), according to one, two or three axes of the real world (pitch, yaw and/or roll axis). The part 12 of the large field-of-view content 10 corresponding to the measured position of the HMD is advantageously determined with a specific function establishing the relationship between the point of view associated with the HMD in the real world and the point of view of a virtual camera associated with the large field-of-view content 10. Controlling the part (i.e. the image) 12 of the video content to be displayed on the display screen(s) of the HMD according to the measured position of the HMD enables a user wearing the HMD to browse into the large field-of-view content, which is larger than the field of view associated with the display screen(s) of the HMD. For example, if the field of view offered by the HMD is equal to 110° (for example about the yaw axis) and if the large field-of-view content offers a content of 180°, the user wearing the HMD may rotate his/her head to the right or to the left to see the parts of the video content outside the field of view offered by the HMD. According to another example, the immersive system is a CAVE (Cave Automatic Virtual Environment) system, wherein the large field-of-view content is projected onto the walls of a room. The walls of the CAVE are for example made up of rear-projection screens or flat panel displays. The user may thus browse his/her gaze on the different walls of the room. The CAVE system is advantageously provided with cameras acquiring images of the user to determine by video processing of these images the gaze direction of the user. According to a variant, the gaze or the pose of the user is determined with a tracking system, for example an infrared tracking system, the user wearing infrared sensors. According to another variant, the immersive system is a tablet or a smartphone with a tactile display screen, the user browsing into the content by moving the tablet/smartphone, the displayed content changing according to the change of position of the tablet/smartphone.

The large field-of-view content 10 and the part 12 as well may comprise real objects and virtual objects, i.e. the scene represented by the large field-of-view content 10 is an augmented-reality scene mixing real and virtual elements. The real objects are part of a real scene that is acquired with an image acquisition device (e.g. a camera) and the virtual objects may be obtained from computer-generated imagery (CGI).

The large field-of-view content 10 and the part 12 as well may comprise foreground object(s) and background object(s). The background object(s) may be obtained for example from a first video representing the background of the large field-of-view content 10. The foreground object(s) may be obtained for example from one or more second videos each representing one or more of the foreground objects, the large field-of-view content being obtained by compositing of the first video with the second video(s). Such a compositing may for example be used to obtain a large field-of-view content with parallax from flat videos.

According to another example, the large field-of-view content rendered and displayed on the immersive display device is obtained by overlaying one or more virtual objects that belongs to an immersive content on an image of a real scene that is for example acquired in real time with the camera of the immersive display device. According to this example, the immersive display device may be a tablet, the image of the real scene onto which is overlaid one or more virtual objects being acquired with the rear camera of the tablet. The image acquired with the rear camera is displayed on the screen of the tablet and a part of the immersive content is overlaid on or composited with the image to obtain an augmented reality (AR) image. A user holding the tablet may acquire several images of the real scene according to several points of view, virtual objects of the immersive content being added to the images according to the points of view of these images of the real scene.

According to a further example, the large field-of-view content rendered and displayed on the immersive display device is obtained by mixing a large field-of-view virtual content (also called large field-of-view CGI content) with images of a real scene acquired with a camera The pose of the camera used to acquire the images of the real scene is for example used to determine the corresponding pose of the virtual camera, to select a part of the large field-of-view virtual content scene corresponding to the image of the real scene to generate the augmented reality (or augmented virtuality) large field-of view content.

In some of the abovementioned examples, the large field-of-view rendered and/or displayed on the immersive display device is obtained by mixing part(s) of an immersive content with one or more images acquired with a standard camera, i.e. non immersive images.

Naturally, the large field-of-view content 10 is not limited to a $4\pi$ steradian video content but extends to any video content (or audio-visual content) having a size greater than the field of view 12. The large field-of-view content may be for example a $2\pi$, 2.5 $\pi$, $3\pi$ steradian content and so on.

It is understood with a video or a video content a sequence of successive still images, the sequence comprising one or more still image(s). The large field-of-view content consequently comprises one or more successive image(s).

An immersive video is a video encoded on at least one rectangular image that is a two-dimension array of pixels (i.e. element of color information) like a "regular" video. To be rendered, the image is first mapped on the inner face of a convex volume, also called mapping surface (e.g. a sphere, a cube, a pyramid), and, second, a part of this volume is captured by a virtual camera. Images captured by the virtual camera are rendered on the screen of an immersive display device (e.g a HMD). A stereoscopic video is encoded on one or two rectangular images, projected on two mapping surfaces which are combined to be captured by two virtual cameras according to the characteristics of the device. Pixels are encoded according to a mapping function in the image. The mapping function depends on the mapping surface. For a same mapping surface, several mapping functions may be possible. For example, the faces of a cube may be structured according to different layouts within the image surface. A sphere may be mapped according to an equirectangular projection or to a gnomonic projection for example.

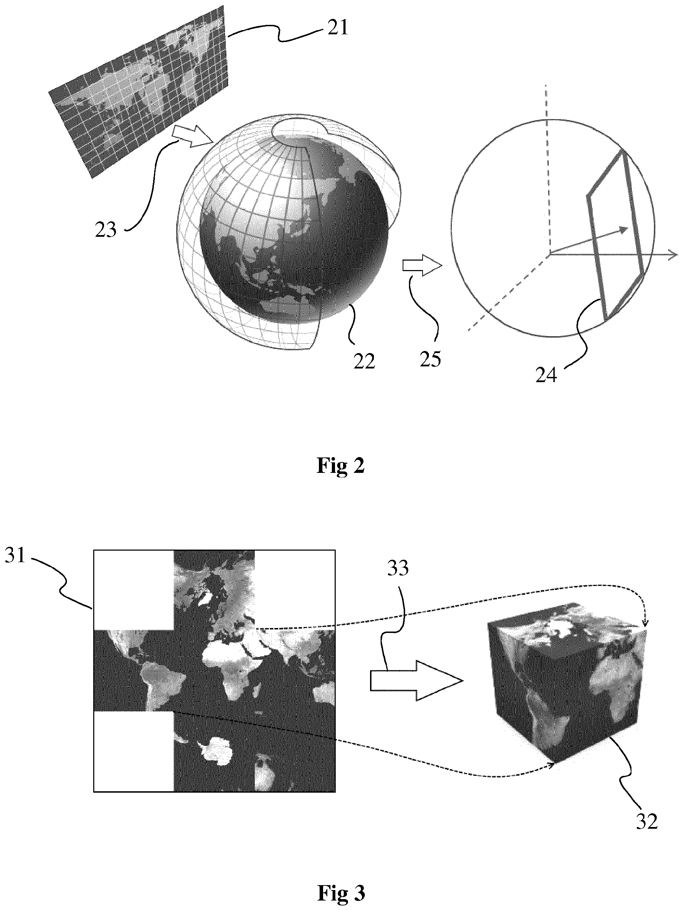

Figures 2 and 3 provide non-limiting examples of such mapping functions.

**Figure 2** shows an example of an equirectangular mapping function. The sequence of image(s) of an immersive video is encoded on a rectangular image 21 meant to be mapped on a spherical mapping surface 22. The mapping function 23 establishes a mapping between each pixel of the image 21 and a point on the mapping surface 22 (and vice versa). On figure 2, the mapping function 23 is based on the equirectangular projection (also called equidistant cylindrical projection). The image on the image 21 is distorted. The distances are respected at the equator and stretched at poles. Straight lines are no longer straight and perspectives are distorted. In variants, the mapping function 23 is based on the equidistant conic projection for instance. If the screen 24 is rectangular, as for head-mounted display devices (HMD) or tablets or smartphones, a part of the mapping surface 22 is selected. The projection function 25 consists in selecting a part of the mapping surface 22 as seen by a camera located at the center of the sphere, the camera being configured in terms of field of view and resolution in order to produce an image that directly fits with the screen 24. The chosen field of view depends on the characteristics of the immersive display device. For HMD for example, the angle of the field of view is close to the human stereoscopic vision field, which is around one hundred and twenty degrees. The aiming direction of the camera corresponds to the direction the user is looking toward and the virtual camera controller of the immersive video rendering device is used to modify the aiming direction of the camera. In a variant, the video of figure 2 is stereoscopic. In such a variant, the image 21 contains two distinct images which are mapped on two distinct mapping surfaces 22. The mapping surfaces are combined according to the type of the screen to render the stereoscopic effect.

**Figure 3** shows an example layout of the cube mapping function. The sequence of images is encoded on a rectangular (or square) image 31 meant to be mapped on a cubical mapping surface 32. The mapping function 33 establishes a correspondence between squares in the image 31 and faces of the cube 32. Vice versa, the mapping function determines how the faces of the cube 32 are organized within the surface of the image 31. Images on each face are not distorted. However, in the total image of the image 31, lines are piece-wise straight and perspectives are broken. The image may contain empty squares (filled with default or random color information, white on the example of figure 3). The projection function works as the projection function of figure 2. A camera is placed at the center of the cube 32 and captures an image that fits the screen of the immersive rendering device.

In variants, other mapping surfaces and/or mapping functions are used, mapping the video image on a cylinder or on a pyramid for instance.

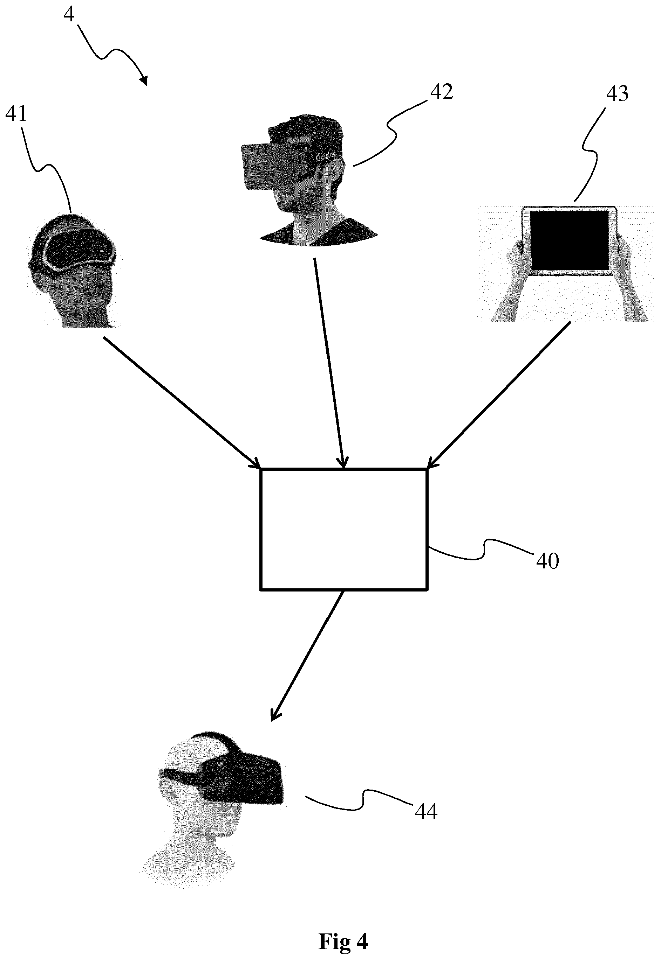

**Figure 4** shows a process of determining a first information representative of the point(s) of view that is (are) comprised in the large field-of-view content 10, and a system 4 configured to determine the point(s) of view, according to a non-limiting embodiment of the present principles.

The system 4 comprises immersive display devices 41, 42, 43 in connection with an apparatus 40 configured to process information obtained from the immersive display devices 41, 42, 43. According to the non-limiting example of figure 4, the immersive display devices 41 to 43 comprise a first HMD 41 worn by a first user watching at the large field-of-view content 10 displayed on the first HMD 41, a second HMD 42 worn by a second user watching at the same large field-of-view content 10 displayed on the second HMD 42 and a tablet 43 hold by a third user watching at the same large field-of-view content 10 displayed on the tablet 43. The first user, second user and third user may be located in different locations, e.g. in different houses of a same town or of different towns in one or different countries. According to a variant, two or more of the first, second and third users are located in a same location, e.g. in a same house. The immersive displays device 41 to 43 may be configured to transmit first information representative of the viewing directions of the large field-of-view content 10 to the apparatus via one or more communications networks, e.g. each immersive display device 41 to 43 is connected to a LAN (Local Area Network) that is connected to the Internet (e.g. via a gateway), the apparatus 40 being connected to the Internet. The first, second and third users may watch at different parts of the large field-of-view content by rotating the head (for the HMD) or the arms (for the tablet). The viewing directions associated with the watched parts of the large field-of-view by the first, second and third user may be consequently different. According to a variant, some of the viewing directions may be the same for the first, second and/or third users. For example, the first user and the second user and/or the third user may watch a same part of the large field-of-view content 10 at a given time and/or at different times, the associated viewing directions transmitted to the apparatus 40 being the same. The number of immersive display devices is not limited to 3 but extends to any number, e.g. 1, 2, 4, 10, 100, 1000, 10000, 100000 or more immersive display devices. The type of immersive display device is not limited to a HMD or to a tablet either but extends to any type of immersive display device adapted to visualize a large field-of-view content, e.g. a smartphone, a computer associated with a mouse and a screen, see-trough glasses or the like.

The apparatus 40 obtains from one or more immersive display devices 41 to 43 a second information that is representative of the viewing directions of the large field-of-view content, i.e. a second information that is representative of the parts (e.g. pixels or blocks of pixels) of the large field-of-view content 10 that are watched by the user wearing/holding/using the immersive display device 41 to 43. The second information may be for example transmitted by the immersive display device and received by the apparatus via the one or more communication networks connecting the immersive display device 41 to 43 and the apparatus 40. According to a variant, the second information is obtained from a storage device, e.g. a memory associated with the apparatus 40 or a remote storage facility (e.g. the cloud, a server). According to this variant, the second information is transmitted by the immersive display device 41 to 43 (either directly or via controller device(s) associated with the immersive display device 41 to 43) to the storage device for memorizing/storing purposes.

The second information may take different forms or may be represented with different syntaxes or structures. For example, the direction according to which a user watches a part of the large field-of-view content may be represented with spherical coordinates, i.e. a value for a radial distance 'r' (that may be set to 1 to then ignore it) and two angles values 'θ' and 'φ', 'θ' for the azimuth and 'φ' for the inclination. According to another example, the direction according to which a user watches a part of the large field-of-view content may be represented with pixel coordinates 'x' and 'y', i.e. 'x' for the number of the column the pixel belongs to and 'y' the number of the row the pixel belongs to. Indeed, as explained with regard to figures 1A, 1 B, 2 and 3, the large field-of-view content may be represented or encoded in a rectangular image (i.e. a matrix of pixels arranged in columns and rows) or mapped onto a spherical or cylindrical surface for example.

A user watching the large field-of-view content may watch the large field-of-view content according to a same direction briefly or during a certain amount of times, e.g. a few milliseconds or a few seconds. When the large field-of-view content corresponds to a video (i.e. a sequence of images or frames), the large field-of-view content may be watched according to a same viewing direction a plurality of times (e.g. for several images of the video, the number of times the viewing direction is met corresponding to the number of images/frames the user has watched according to this same viewing direction). According to a variant, the second information may comprise the number of times a same viewing direction is detected or measured and/or the time a same viewing direction is detected or measured. According to this variant, the second information comprises the coordinates associated with the viewing direction(s) and the number of times the user watches the content according to each viewing direction (or the time spent to watch the content according to ach viewing direction).

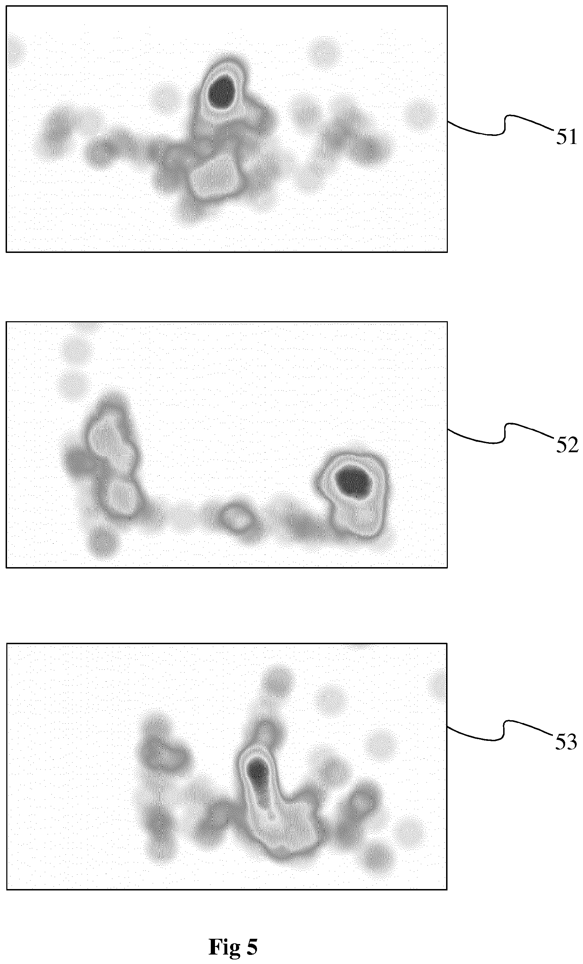

The second information may for example take the form of a heat map, as illustrated on figure 5. The heat map may for example correspond to an image (i.e. a matrix of pixels) having the same number of columns and rows of pixels as the large field-of-view content. One heat map may be associated with one image/frame of the large field-of-view content. According to a variant, one heat map may be associated with a plurality of images/frames of the large field-of-view content, i.e. with a plurality of successive images (i.e. a sequence of images) in a temporal point of view. For example, one heat map may be associate with each scene (also called cut or sequence) of the large field-of-view content. According to another variant, one heat map may be generated for the whole content, i.e. may be associated with the whole large field-of-view content. Color information may be associated with the pixels of the heat map, each pixel corresponding to one different viewing direction. The color associated with a given pixel may be determined according to the time spent to watch the large field according to the viewing direction associated with the given pixel (or according to the number of times/images the content is watched according to the viewing direction associated with the given pixel). For example, the heat map may be a grayscale image, a grayscale value being associated with each pixel, e.g. the value being comprised between 1 (i.e. white color) for pixels not seen (i.e. viewing directions not met when watching the large field-of-view content) and 0 (i.e. black color) for pixels the most seen (i.e. viewing directions the most met when watching the large field-of-view content). The values associated with the pixels of the heat map may be comprised with 0 and 255 or 0 and 1024, depending on the number of bits used to encode the grayscale values. Other representations may be used to represent the second information, for example histograms, fractal maps or tree maps.

The second information representative of the viewing direction is for example generated by the immersive display device 41 to 43. For example, the parameters representative of the viewing direction may be obtained from inertial sensors such as gyroscopes or from the IMU (Inertial Measurement Unit) of the immersive display device. According to a variant, the second information representative of the viewing direction may be obtained via an external tracking system, e.g. an external infrared camera tracking infrared emitters embedded into or on the immersive display device. According to this variant, the external tracking system enables to obtain the position (location) of the immersive display device within the user's frame of reference. The second information may then be obtained via a transfer function enabling to pass from the user's frame of reference to the frame of reference of the large field-of-view. According to another variant, the information representative of the position (location) of the immersive display device within the user's frame of reference may be obtained by using computer vision techniques, i.e. by analyzing an image of the environment of the user wearing/holding the immersive display device. According to this variant, the gaze direction of the user may be detected to obtain the viewing direction. The gaze of the user may be determined by implementing geometric model based algorithms or appearance-based algorithms. The geometric model based algorithms use 3D geometric models of the eye to estimate the gaze as described for example in E. D. Guestrin and M. Eizenman, "General theory of remote gaze estimation using the pupil center and corneal reflections," IEEE Trans. Biomed. Eng., vol. 53, no. 6, pp. 1124-1133, Jun. 2006. The gaze point is determined as the intersection between the 3D gaze direction (i.e., the visual axis) and the screen plane. Most model-based algorithms use the corneal reflection technique that requires additional light sources (i.e., infrared light, IR) to illuminate the eyes and IR cameras to capture the eye glints. The basic idea is to estimate the gaze from the relative position between the pupil center and the glint, i.e., the brightest light spot on the eye due to reflection. In contrast, appearance-based algorithms consider the gaze estimation as a 2D mapping problem between the features of the eyes and the gaze positions on the screen. The mapping function may be for example found by training a multi-layer neural network or a regression model, or simply by a linear interpolation between the gaze points (in 2D space) and the eye appearances after applying a dimensional reduction.

The apparatus 40 also obtains from the one or more immersive display devices 41 to 43, or from a remote storage device, a third information that is representative of an interest in the large field-of-view content. The third information may correspond to any one of the following information or to a combination of two or more of the following information:

- information representative of the time spent to consume said large field-of-view content, e.g. the duration of visualisation of the large field-of-view content or the percentage of the content that has been watched by a user; such an information provides an indication of the interest of the user watching the large field-of-view content in the large field-of-view content. It may be considered that a user that spends a long time visualizing the content or visualizing the whole content (one or several times) is very interested in the content. In contrast, a user watching a small part of the content or spending only a few seconds watching it is not very interested in the content.

- information representative of a rate associated with said large field-of-view content, e.g. the number of 'like' or 'dislike' associated with a large field-of-view content.
- information representative of a result of a semantic analysis of a comment associated with said large field-of-view content. Comments written by one or more users about the large field-of-view content may be semantically analysed to determine the interest of users in the content, e.g. whether users having let comments have a positive or negative opinion on the large field-of-view content;
- information representative of the number of times said large field-of-view content has been rendered. It may be considered that the higher the number of times the large field-of-view content has been visualized the higher the interest of the users in the content is; and
- information representative of the distribution of the large field-of-view content on a network, e.g. the number of times the large field-of-view content or part of it has been shared or distributed on social network platforms such as Facebook® or Twitter® for example.

The third information may be for example used to weight the second information to obtain the first information on the point(s) of interest of the large field-of-view content 10. To reach that aim and according to a non-limiting example, a first weight may be associated with each pixel of the heat map to modify the importance of the heat map (i.e. of the collected viewing directions) according to the experience of the user(s) watching or having watched the large field-of-view content.

A sub-weight may be obtained from each information listed hereinbelow, for example:

- information representative of the time spent to consume the large field-of-view content: sub-weight related to the duration 'd' for example comprised between 0 and 1, 0 for 0% of the content watched to 1 for 100% of the content watched, the global sub-weight 'd' assigned to the large field-of-view content corresponding to the average of all sub-weights;
- information representative a rate associated with said large field-of-view content: sub-weight related to the rate 'r' for example comprised between 0.8 and 1.2, 0.8 for a dislike, 1.2 for a like and 1 for no rate, the global sub-weight 'r' assigned to the large field-of-view content corresponding to the average of all sub-weights;
- information representative of a result of a semantic analysis of a comment associated with said large field-of-view content: sub-weight related to the comment 'c' for example comprised between 0.8 and 1.2, 0.8 for a negative comment, 1.2 for a positive comment and 1 for no comment or for comment not classified as positive or negative, the global sub-weight 'c' assigned to the large field-of-view content corresponding to the average of all sub-weights;
- information representative of the number of times said large field-of-view content has been rendered: sub-weight related to the number of views 'v' for example comprised between 1 and 2, obtained with the following equation: v = 1+Nviews/l, with Nviews corresponding to the number of times the content has been watched by a given user, and l being a determined limit of times, e.g. 100; the global sub-weight 'v' assigned to the large field-of-view content corresponding to the average of all sub-weights 'v' obtained from the different users; and
- information representative of a distribution of the large field-of-view content on a network: sub-weight related to the distribution 's' for example comprised between 1 and 2 obtained with the following equation: $s = 1+N_{distribution}/l$, with $N_{distribution}$ corresponding to the number of times the content has been distributed or shared by a given user, and l being a determined limit of times, e.g. 100; the global sub-weight 's' assigned to the large field-of-view content corresponding to the average of all sub-weights 's' obtained from the different users.

The first weight that is applied to the second information to obtain the first information depends on the sub-weights that are considered. Only one sub-weight may be considered or a combination of several or all sub-weights may be considered. When all information are used to weight the second information, i.e. when all sub-weights are used to obtain the first weight, the first weight 'W1' is obtained from the following equation:

$$W1 = \frac{d \times l \times v \times c \times s}{5.76}, W1 \in [0\,;1] \qquad \text{Equation 1}$$

Where 5.76 corresponds to the maximum value of (d x l x c x v x s).

Naturally the equation to obtain 'W1' varies according to the sub-weights used or considered to obtain the first weight.

The weighting W for each pixel having a value $P_{i,j}$ (i and j corresponding respectively to the row and the column the pixel P belongs to) of the heat map may then be obtained with the following equation:

$$W(P_{i,j}) = P_{i,j} \times w1, W \in [0;1] \qquad \text{Equation 2}$$

The apparatus 40 obtains for example a second information and a third information from each immersive display device 41 to 43 and determines a first information representative of the points of interest. For example, the apparatus 40 generates a heat map for each immersive display device, weights the heat maps with the corresponding first weights (i.e. the first weight obtained from the third information received from a considered immersive display device corresponds to the heat map obtained from the considered immersive display device) and generates a final heat map that corresponds for example to a combination of all weighted heat maps, i.e. the final heat map corresponds for example to the average of all obtained weighted heat maps. Such an example is illustrated with Figure 5.

**Figure 5** shows an example of a representation for the first information representative of the point of interest of the large field-of-view content 10. The first information is represented with a heat map 53 that corresponds to a grayscale image having the same size (same number of pixels) as a rectangular representation of the large field-of-view content. The heat map 53 is for example associated with a frame of the large field-of-view content (i.e. an image of the large field-of-view at a given instant) or with a group of successive frames, for example 10, 20 or 100 frames. The heat map 53 is obtained from a first heat map 51 and a second heat map 52. The first heat map 51 is for example generated from the first information obtained from the first immersive display device 41. The darkest pixels of the heat map 51 represents the pixels of the large field-of-view content the most seen and the white pixels the less seen or the pixels not seen at all by the user using the first immersive display device 41. The second heat map 52 is for example generated from the first information obtained from the first immersive display device 42. The darkest pixels of the heat map 52 represents the pixels of the large field-of-view content the most seen and the white pixels the less seen or the pixels not seen at all by the user using the first immersive display device 42. The heat map 53 is generated from the combination of the first and second heat maps 51, 52. The heat map 53 corresponds for example to the average of the weighted first heat map and the weighted second heat map. The weighted first heat map corresponds to the first heat map 51 to which is applied the first weight obtained from the third information obtained from the first immersive display device 41. The weighted second heat map corresponds to the second heat map 51 to which is applied the first weight obtained from the third information obtained from the second immersive display device 42, as explained with regard to figure 4. The point of interest or area of interest of the large field-of-view is determined from the heat map 53 (corresponding to the first information according to the embodiment illustrated with figure 5) as being the pixels the most seen, i.e. the darkest pixels. As the heat map 53 is associated with one or more image of the large field-of-view content having the same number of pixels (same number of rows and columns) as the heat map 53, the point of interest comprised in the one or more images is located where the darkest pixels appear on the associated heat map 53.

The first and second heat maps 51 and 52 may be generated by the apparatus 40 or by each immersive display device 41 and 42 (or a controller associated with the immersive display device) from which are obtained the second information, i.e. on the user's side.

According to an optional variant, a second weight may be applied to the second information (e.g. the heat map) in addition to the first weight to obtain the first information representative of the point(s) of interest. The second weight may be obtained from a fourth information that is representative of the profile of the user consuming the large field-of-view content 10 with the immersive display device used to obtain the second information. Said differently, a second weight may be obtained for each immersive display device to further weight the second information (the heat map) associated with or obtained from each immersive display device. The fourth information corresponds for example to the level of experience of the user, i.e. provides information whether the user is a novice or an expert on large field-of-view content. The fourth information may be for example obtained by analyzing the type of contents consumed by the user, the user being considered as an expert when the total number of large field-of-view contents consumed exceeds a determined number (e.g. 100, 1000 or more). A sub-weight 'p' may be obtained, for example comprised between 1 and 2. When the second weight is taken into account, the sub-weight 'p' may be added into the equation 1 in the same way as the other sub-weights, the value of the denominator of equation 1 being adapted accordingly.

According to a further optional variant, a third weight may be applied to the second information (e.g. the heat map) in addition to the first weight (and optionally in addition to the second weight) to obtain the first information representative of the point(s) of interest. The third weight may be obtained from a fifth information that is representative of the behaviour of the user consuming the large field-of-view content 10 with the immersive display device used to obtain the second information. Said differently, a third weight may be obtained for each immersive display device to further weight the second information (the heat map) associated with or obtained from each immersive display device. The fifth information may for example be obtained analyzing the behaviour of the user when watching the large field-of-view content, i.e. by analyzing for example whether the immersive display device moves or not during the displaying of the large field-of-view display. For example, when the user does not move at all when watching the content or moves too fast (i.e. the displacement speed of the immersive display device is greater than a determined speed limit), it may be considered that the user is not watching the content. A sub-weight 'b' may be obtained, for example comprised between 0 and 1, 0 when not watching the content and 1 when watching the content with a high concentration. When the third weight is taken into account, the subweight 'b' may be added into the equation 1 in the same way as the other sub-weights, the value of the denominator of equation 1 being adapted accordingly.

The apparatus 40 is configured to process the large field-of-view content according to the first information, i.e. according to the point(s) of view that are determined. The apparatus 40 is also configured to transmit the processed large field-of-view content to one or more immersive display devices 44. The processed large field-of-view may also be transmitted to the immersive display devices 41 to 43 having transmitted the second and third information. The processing of the large field-of-view content 10 comprises one of the following operations or a combination of the following operations:

- associating metadata with the large field-of-view content, the metadata comprising information on the location of the one or more determined points of interest. The metadata may be used by the immersive display device when rendering the large field-of-view content to guide the user watching the large field-of-view content with the immersive display device to not miss the points of interest;
- modifying the large field-of-view content, e.g. by centring the large field-of-view content around the determined point of interest (or one of them when more than two points of interest have been determined, e.g. the point of interest determined as being the most seen from the collected second and third information) so that the displaying of the large field-of-view content starts with the part of the large field-of-view content comprising the determined point of interest and/or by blurring areas of the large field-of-view content that do not comprise a point of interest and/or by adding content (e.g. audio or graphical information) to indicate where the point(s) of interest is (are) located.

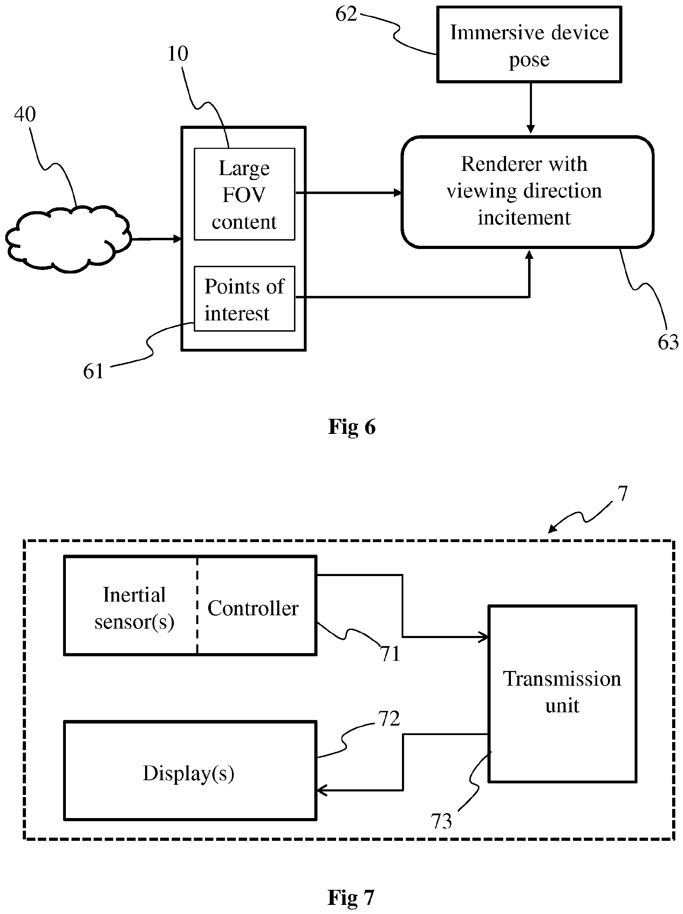

According to the processing applied to the large field-of-view content, the immersive display device 44 may further adapt or not the large field-of-view content. For example, when the large field-of-view has already been modified (i.e. centred or blurred as explained hereinabove), the immersive display device 44 does not need to further process the large field-of-view content. The displaying of the large field-of-view content already processed by the apparatus 40 is enough to make the user see the point(s) of interest. When metadata indicating the location of the point(s) of interest within the large field-of-view content, the immersive display device (or a controller associated with the immersive display device) may further process the large field-of-view content to incite the user to watch the area(s) of the large field-of-view content comprising the point(s) of interest. Figure 6 illustrates an example of such a further processing of the large field-of-view content.

**Figure 6** shows a process configured to incite a user to watch the determined point(s) of interest of the large field-of-view content, according to a specific and non-limiting embodiment of the present principles. The process is for example implemented by the immersive display device 44 (or the controller associated with the immersive display device) receiving the large field-of-view content.

The immersive display device 44 receives from the apparatus 40 (via one or more communication networks such as a LAN, the Internet, a WAN (Wide Area Network) or the like) data representative of the large field-of-view content 10 (e.g. Red, Green and Blue (RGB) data for each pixel of the large field-of-view content) with data 61 representative of the points of interest, e.g. the coordinates of the points of interest within the large field-of-view content 10 or coordinates representative of the limits of spatial part(s) of the large field-of-view content comprising the point(s) of interest. Data 10 representative of the large field-of-view content are provided/transmitted to a rendering module (hardware or software) 63 with the data 61 representative of the points of interest. The rendering module may be embedded in the immersive display device 44 or in the controller rendering the content to be displayed on the immersive display device 44. The rendering module 63 also received information 62 representative of the pose of the immersive display device 44, for example the viewing direction obtained from the IMU when the immersive display device 44 is a HMD. The rendering of the large field-of-view content is performed according to the pose information 62 and the data 61. For example, when the pose information 62 indicates that the gaze of the user moves away from the point of interest, the part(s) of the large field-of-view that are rendered and displayed do not correspond to the pose information, as if there was a resistance to the movement of the head/gaze of the user when it moves away the point of interest. Such an effect may be for example obtained with a mapping function (the mapping function represents the relationship between the pose of the immersive display device and the point of view of the part of the large field-of-view content displayed on the immersive display device) having different behaviour depending on whether the detected pose of the immersive display device corresponds to an area of the large field-of-view content comprising or not a point of interest. For example, when the pose of the immersive display device remains with a range of values that corresponds to a part of the large field-of-view content comprising a point of interest, the rendered/displayed part of the immersive display part follows the change of pose of the immersive display device. When the pose of the immersive display device is outside a range of values that corresponds to a part of the large field-of-view content comprising a point of interest, the rendered/displayed part of the immersive display part does not follow the change of pose of the immersive display device, e.g. as if the change of point of view of the large field-of-view were slower than the change of pose when moving away from the point of interest, as if there was a resistance when moving away from the point of interest. Such an implementation is described in the European patent application EP15307094.1 filed on December 22, 2015 in the European Patent Office.

**Figure 7** diagrammatically shows a hardware embodiment of an immersive display device 7 configured for displaying and/or rendering a large field-of-view video content 10, the content of which varying at least in part according to the position of the immersive display device 7. The immersive display device 7 corresponds for example to a HMD. The immersive display device 7 comprises at least one inertial sensor 71, at least one display unit (for example a LCD (Liquid Crystal Display), OLED (Organic Light-Emitting Diode) or LCOS (Liquid Crystal On Silicon)) 72 and a transmission unit 73. The inertial sensor 71 corresponds for example to a gyroscope and the immersive display device 7 comprises for example three gyroscopes, one for the pitch, one for the roll and one for yaw. According to another example, the inertial sensor 71 corresponds to an IMU (Inertial Measurement Unit). A controller may be associated with the inertial sensor, the controller being configured to process the data representative of change of position of the device acquired by the inertial sensor and to transmit this data to the transmission unit 73 via a first bus. The transmission unit 73 is for example a wireless interface and is configured to transmit the data received from the inertial sensor 71 to an external device (not shown) via a wireless link (for example according to Wi-Fi or Bluetooth). The external device is for example a Set-Top Box (STB), a computer or any device adapted to store and/or compose and/or decode video content(s). The transmission may be further configured to receive data, via the wireless link, representative of the image(s) 10 of the video content to be displayed on the display unit(s) 72, for example from the external device. The data representative of the image(s) 10 to be displayed are then transmitted to the display unit(s) 72 via a second bus. According to a variant, the transmission unit is an interface configured to transmit/receive data via a wired link, for example according to USB or HDMI standard. The external device may transmit to the HMD the part of the video content corresponding to the measured position of the HMD. The part of the video content corresponding to the measured position of the HMD is for example determined with a specific function establishing the relationship between the point of view associated with the HMD in the real world and the point of view of a virtual camera associated with the video content. Controlling the parts of the video content to be displayed on the display screen(s) of the immersive display device according to the measured position of the immersive display device enables a user wearing the immersive display device to browse into the video content, especially when the video content is larger than the field of view associated with the display screen(s) of the immersive display device. For example, if the field of view offered by the immersive display device, i.e. a HMD, is equal to 110°(for example about the yaw axis) and if the vi deo content offers a content of 180°, the user wearing the HMD may rotate his/he r head to the right or to the left to see the parts of the video content outside the field of view offered by the HMD.

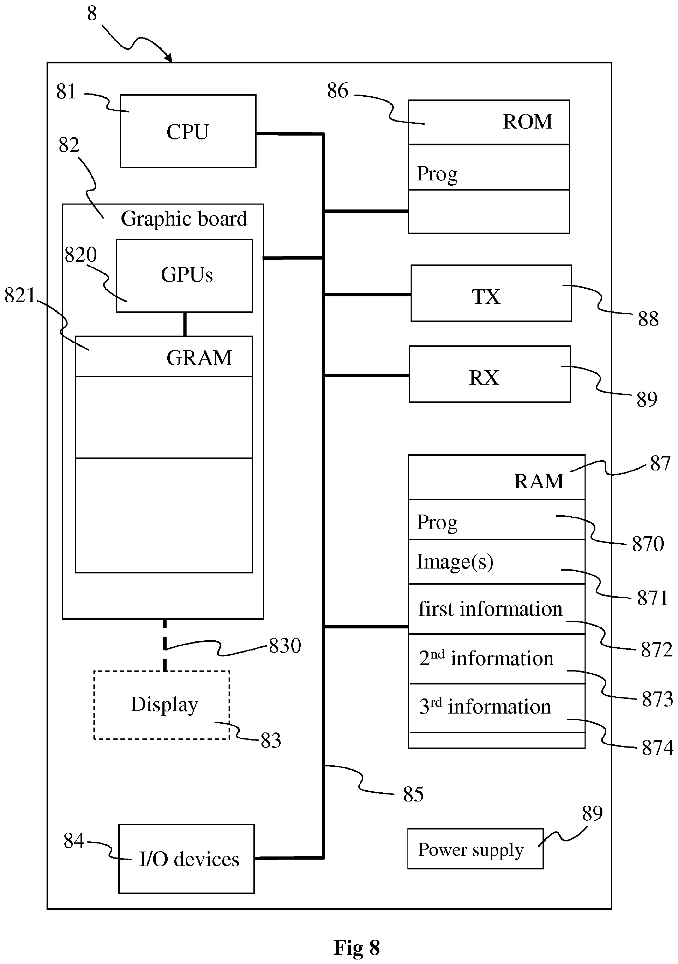

Figure 8 diagrammatically shows a hardware embodiment of an apparatus 8 configured for determining point(s) of interest of a large field-of-view content and/or for processing a large field-of-view content and/or for rendering the large field-of-view content, whether the large field-of-view content is processed or not. The apparatus 8 is also configured for the creation of display signals of one or several images. The apparatus 8 corresponds for example to a tablet, a Smartphone, a games console, a computer, a laptop or a Set-top box and/or may be a component of the immersive display device 7.

The apparatus 8 comprises the following elements, connected to each other by a bus 85 of addresses and data that also transports a clock signal:

- a microprocessor 81 (or CPU),
- a graphics card 82 comprising:

 • several Graphical Processor Units (or GPUs) 820,
 • a Graphical Random Access Memory (GRAM) 821,

- a non-volatile memory of ROM (Read Only Memory) type 86,
- a Random Access Memory or RAM 87,
- a transmitter 88 configured to transmit data representative of the images,
- a receiver 89 configured to receive data from the immersive display device (e.g. second information representative of a viewing direction) and/or from other apparatus (e.g. the third, fourth and/or fifth information), from acquisition device(s) (e.g. data representative of the large field-of-view content) and/or from storage devices (storing the data representative of the content, the first, second, third, fourth and/or fifth information);
- one or several I/O (Input/Output) devices 84 such as for example a tactile interface, a mouse, a webcam, etc. and
- a power source 89.

The apparatus 8 may also comprise one or more display devices 83 of display screen type directly connected to the graphics card 82 to display images calculated in the graphics card, for example live. The use of a dedicated bus to connect the display device 83 to the graphics card 82 offers the advantage of having much greater data transmission bitrates and thus reducing the latency time for the displaying of images composed by the graphics card. According to a variant, a display device is external to the apparatus 8 and is connected to the apparatus 8 by a cable or wirelessly for transmitting the display signals. The apparatus 8, for example the graphics card 82, comprises an interface for transmission or connection (not shown in figure 8) adapted to transmit a display signal to an external display means such as for example the first display device (e.g. an HMD), a LCD or plasma screen or a video-projector.

It is noted that the word "register" used in the description of memories 821, 86, and 87 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 81 loads and executes the instructions of the program contained in the RAM 87.

The random access memory 87 notably comprises:

- in a register 870, the operating program of the microprocessor 81 responsible for switching on the apparatus 8,
- data 871 representative of the large field-of-view content (for example RGB data),
- first information 872;
- second information 873;
- third information 874.

The algorithms implementing the steps of the method(s) specific to the present disclosure (e.g. the method of transmitting a first image and/or the method of compositing the first image) are stored in the memory GRAM 821 of the graphics card 82 associated with the apparatus 8 implementing these steps. When switched on and once the data 871 and the information 873, 874 are loaded into the RAM 87, the graphic processors 820 of the graphics card 82 load these parameters into the GRAM 821 and execute the instructions of these algorithms in the form of microprograms of "shader" type using HLSL (High Level Shader Language) language or GLSL (OpenGL Shading Language) for example.

The random access memory GRAM 821 notably comprises:

- in a register, data representative of the images;
- in a register, data representative of first, second and third information.

According to another variant, a part of the RAM 87 is assigned by the CPU 81 for storage of the identifiers and the distances if the memory storage space available in GRAM 821 is insufficient. This variant however causes greater latency time in the composition of an image comprising a representation of the environment composed from microprograms contained in the GPUs as the data must be transmitted from the graphics card to the random access memory 87 passing by the bus 85 for which the transmission capacities are generally inferior to those available in the graphics card for transmission of data from the GPUs to the GRAM and vice-versa.

According to another variant, the power supply 88 is external to the apparatus 8.

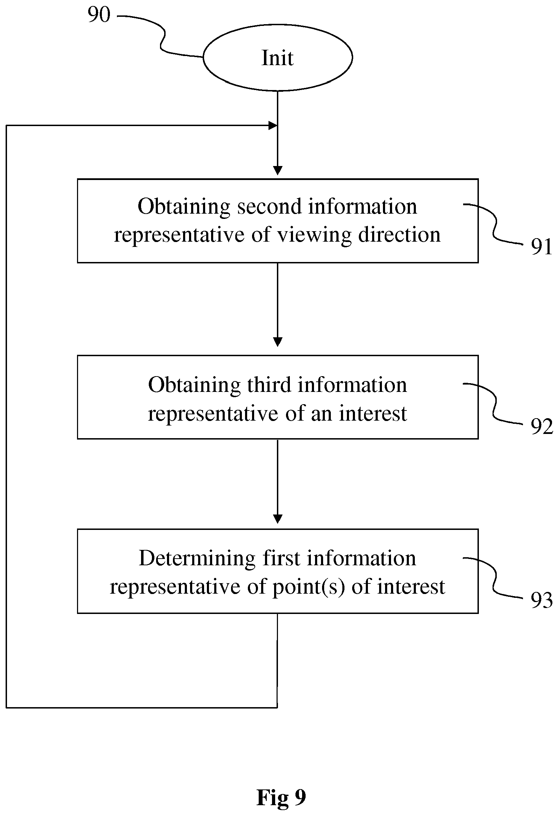

In an alternate embodiment, the apparatus 8 does not include any ROM but only RAM, the algorithms implementing the steps of the method specific to the present disclosure and described with regard to figure 9 being stored in the RAM. According to another variant, the apparatus 8 comprises a SSD (Solid-State Drive) memory instead of the ROM and/or the RAM.

**Figure 9** shows a method of determining a first information representative of one or more points of interest of a large field-of-view content, according to a non-limiting embodiment of the present principles. The method is for example implemented in the apparatus 8 or in the immersive display device 7.

In a step 90, the different parameters of the apparatus 8 are updated. In particular, the parameters representative of the viewing directions and/or of the interest in the large field-of-view content are initialised in any way.

In a step 91, a second information representative of one or more viewing directions is obtained, each viewing direction corresponding to the direction according to which a user wearing or holding an immersive display device (used to display the large field-of-view content) watches the large field-of-view content, or part of it. The viewing direction enables to determine which part of the large field-of-view content is displayed on the screen(s) of the immersive display device. The second information is for example obtained, i.e. measured or determined, directly by the immersive display device (that may transmit the second information via one or more wired or wireless networks), by a controller controlling the immersive display device (e.g. rendering the part of the large field-of-view content to display on the screen of the immersive display device according to the measured viewing direction) or by a system configured to determine the viewing direction, such as an external tracking system, e.g. a gaze tracking system. According to another example, the second information is obtained, i.e. received, from a storage device, e.g. a local memory device, e.g. RAM, GRAM and/or SSD of the apparatus 8, or from a remote memory device/entity, such as a server or the cloud.

In a step 92, a third information representative of an interest in the large field-of-view content is obtained, i.e. determined or received for example. The third information is for example one of the following information or any combination of the following information:

- information representative of the time spent to consume the large field-of-view content;
- information representative of a rate associated with the large field-of-view content;
- information representative of a result of a semantic analysis of a comment associated with the large field-of-view content;
- information representative of the number of times the large field-of-view content has been rendered and/or displayed; and
- information representative of a distribution of the large field-of-view content on a network.

The third information is for example received from the immersive display device, from a controller associated with the immersive display device, from a remote storage device such as a server onto which the large field-of-view content may be stored. According to a variant, the third information is obtained, i.e. received, from a storage device, e.g. a local memory device, e.g. RAM, GRAM and/or SSD of the apparatus 8, or from a remote memory device/entity, such as a server or the cloud.

In a step 93, the first information is determined from the second information and from the third information. A location of a point of interest in the large field-of-view content may for example be determined as the spatial area of the large field-of-view content that is the most viewed, the second information being taken into account for example only the third information, or a value associated with the third information, is greater than or equal to a determined value (for example when the time spent to consume the large field-of-view content is greater than a determined time, and/or when the large field-of-view content has been rendered more than a determined number of times). A first information representative of one point of view may be determined for a spatial part of the large field-of-view content and/or for a temporal part of the large field-of-view content. A temporal part of the large field-of-view content corresponds for example to a duration or a number of consecutive frames, e.g. when the large field-of-view content is a video. Naturally, a point of view may vary with the time, i.e. a point of view may be an object at a given instant of time and another object at another instant of time, e.g. later than the given instant of time. In a same way, a plurality of points of interest may be determined at a same instant of time, e.g. within a same image / frame of the large field-of-view content.

Naturally, the present disclosure is not limited to the embodiments previously described.

In particular, the present disclosure is not limited to a method and device for determining a first information representative of a point of view but also extends to a method of processing the large field-of-view content according to the first information and/or to a method of rendering and/or displaying the processed large field-of-view content, and to any device implementing these methods and notably any devices comprising at least one CPU and/or at least one GPU.

The present disclosure also relates to a method (and a device configured) for obtaining/generating images of a large field-of-view content focusing the interest of a user in the determined point(s) of interest.

The present disclosure also relates to a method (and a device configured) for receiving the data representative of the processed large field-of-view content, for example data received by the immersive display device 7 from the apparatus 8.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of determining a first information representative of a point of interest of a large field-of-view content (10), the method comprising:

   - obtaining (91) a second information representative of at least a viewing direction (110) associated with at least a part of said large field-of-view content (10);
   - obtaining (92) a third information representative of an interest in said large field-of-view content;
   - determining (93) said first information from said second information and said third information.

2. The method according to claim 1, wherein said third information belongs to a group of information comprising:

   - information representative of the time spent to consume said large field-of-view content;
   - information representative of a rate associated with said large field-of-view content;
   - information representative of a result of a semantic analysis of a comment associated with said large field-of-view content;
   - information representative of the number of times said large field-of-view content has been rendered; and
   - information representative of a distribution of the large field-of-view content on a network.

3. The method according to one of claims 1 to 2, further comprising determining a first weighting value from said third information, the second information being weighted with said first weighting value to determine said first information.

4. The method according to one of claims 1 to 3, further comprising obtaining a fourth information representative of a profile of a user consuming said large field-of-view content, said first information being further determined from said fourth information.

5. The method according to claim 4, further comprising determining a second weighting value from said fourth information, the second information being weighted with said second weighting value to determine said first information.

6. The method according to one of claims 1 to 5, further comprising processing said large field-of-view content according to said first information and transmitting the processed large field-of-view content.

7. A device (8) configured to determine a first information representative of a point of interest of a large field-of-view content, the device comprising a memory (87) associated with a processor (81) configured to:

   - obtain a second information representative of at least a viewing direction associated with at least a part of said large field-of-view content;
   - obtain a third information representative of an interest in said large field-of-view content;
   - determine said first information from said second information and said third information.

8. The device according to claim 7, wherein said third information belongs to a group of information comprising:

   - information representative of the time spent to consume said large field-of-view content;
   - information representative of a rate associated with said large field-of-view content;
   - information representative of a result of a semantic analysis of a comment associated with said large field-of-view content;
   - information representative of the number of times said large field-of-view content has been rendered; and
   - information representative of a distribution of the large field-of-view content on a network.

9. The device according to one of claims 7 to 8, wherein said processor is further configured to determine a first weighting value from said third information, the second information being weighted with said first weighting value to determine said first information.

10. The device according to one of claims 7 to 9, wherein said processor is further configured to obtain a fourth information representative of a profile of a user consuming said large field-of-view content, said first information being further determined from said fourth information.

11. The device according to claim 10, wherein said processor is further configured to determine a second weighting value from said fourth information, the second information being weighted with said second weighting value to determine said first information.

12. The device according to one of claims 7 to 11, wherein said processor is further configured to process said large field-of-view content according to said first information and transmit the processed large field-of-view content.

13. A non-transitory processor readable medium having stored therein instructions for causing a processor to perform at least the steps of the method according to one of claims 1 to 6.

**Fig 1A**

**Fig 1B**

**Fig 2**

**Fig 3**

**Fig 4**

**Fig 5**

62

Immersive device
pose

10

40

Large
FOV
content

Renderer with
viewing direction
incitement

Points of
interest

63

61

**Fig 6**

7

Inertial
sensor(s)

Controller

71

Transmission
unit

72

Display(s)

73

**Fig 7**

8

81 — CPU

82 — Graphic board

820 — GPUs

821 — GRAM

86 — ROM

Prog

88 — TX

89 — RX

87 — RAM

870 — Prog

871 — Image(s)

872 — first information

873 — 2nd information

874 — 3rd information

830

Display

83

85

84 — I/O devices

89 — Power supply

**Fig 8**

90

Init

Obtaining second information
representative of viewing direction
91

Obtaining third information
representative of an interest
92

Determining first information
representative of point(s) of interest
93

**Fig 9**

EP 3 337 154 A1

**Europäisches Patentamt**
**European Patent Office**
**Office européen des brevets**

# EUROPEAN SEARCH REPORT

Application Number

EP 16 30 6678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 099 030 A1 (THOMSON LICENSING [FR]) 30 November 2016 (2016-11-30) * paragraphs [0022] - [0025] * ----- | 1,7 | INV. H04N5/225 H04N5/232 H04N13/00 H04N13/04 G02B27/01 |
| Y | US 2015/116203 A1 (NARITA TOMOYA [JP] ET AL) 30 April 2015 (2015-04-30) * paragraphs [0063], [0067] - [0069], [0077] - [0078], [0085], [0095] - [0097] * ----- | 1,7 | |
| Y | WO 2016/151506 A1 (AUGMEDICS LTD [IL]) 29 September 2016 (2016-09-29) * page 13, line 22 - page 14, line 11 * * page 15, line 31 - page 18, line 20 * ----- | 1,7 | |
| A | US 2015/310665 A1 (MICHAIL ASHRAF AYMAN [US] ET AL) 29 October 2015 (2015-10-29) * paragraphs [0050] - [0051], [0065] - [0069], [0094] * ----- | 1-13 | |
| A | WO 2016/193024 A1 (THOMSON LICENSING [FR]) 8 December 2016 (2016-12-08) * page 18, line 30 - page 21 * ----- | 1-13 | TECHNICAL FIELDS SEARCHED (IPC) H04N G02B |

The present search report has been drawn up for all claims

| Place of search | Date of completion of the search | Examiner |
|---|---|---|
| Berlin | 29 May 2017 | Materne, Alain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 16 30 6678

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2017

| Patent document cited in search report | | Publication date | Patent family member(s) | | Publication date |
|---|---|---|---|---|---|
| EP 3099030 | A1 | 30-11-2016 | CN | 106210743 A | 07-12-2016 |
| | | | EP | 3099030 A1 | 30-11-2016 |
| | | | EP | 3099035 A1 | 30-11-2016 |
| | | | JP | 2016225977 A | 28-12-2016 |
| | | | KR | 20160138908 A | 06-12-2016 |
| | | | US | 2016352872 A1 | 01-12-2016 |
| US 2015116203 | A1 | 30-04-2015 | JP | 6007600 B2 | 12-10-2016 |
| | | | JP | 2013254358 A | 19-12-2013 |
| | | | US | 2015116203 A1 | 30-04-2015 |
| | | | WO | 2013183206 A1 | 12-12-2013 |
| WO 2016151506 | A1 | 29-09-2016 | GB | 2536650 A | 28-09-2016 |
| | | | WO | 2016151506 A1 | 29-09-2016 |
| US 2015310665 | A1 | 29-10-2015 | CN | 106462370 A | 22-02-2017 |
| | | | EP | 3137972 A1 | 08-03-2017 |
| | | | KR | 20160149252 A | 27-12-2016 |
| | | | US | 2015310665 A1 | 29-10-2015 |
| | | | WO | 2015167908 A1 | 05-11-2015 |
| WO 2016193024 | A1 | 08-12-2016 | EP | 3098752 A1 | 30-11-2016 |
| | | | WO | 2016193024 A1 | 08-12-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15307094 A

**Non-patent literature cited in the description**

- **E. D. GUESTRIN ; M. EIZENMAN.** General theory of remote gaze estimation using the pupil center and corneal reflections. *IEEE Trans. Biomed. Eng.,* June 2006, vol. 53 (6), 1124-1133